# FASCICULE DE BREVET EUROPEEN

(11) **EP 3 672 873 B1**
(45) Date de publication et mention de la délivrance du brevet: **27.01.2021**
(21) Numéro de dépôt: 19752510.8
(22) Date de dépôt: 12.08.2019
(51) Int. Cl.: B64G 1/10, B64G 1/66, B64G 1/50, H01Q 1/12, H01Q 1/28, H01Q 19/17, H01Q 21/28

(54) **VÉHICULE SPATIAL, LANCEUR ET EMPILEMENT DE VÉHICULES SPATIAUX**
RAUMFAHRZEUG, STARTGERÄT UND STAPEL VON RAUMFAHRZEUGEN
SPACE VEHICLE, LAUNCHER AND STACK OF SPACE VEHICLES

(30) Priorité: 23.08.2018 FR 1857621
(43) Date de publication de la demande: 01.07.2020
(73) Titulaire: Airbus Defence and Space SAS, 31402 Toulouse Cedex 4 (FR)
(72) Inventeur: CAEL, Philippe, 31402 TOULOUSE Cedex 4 (FR)
(74) Mandataire: Plasseraud IP
(86) Numéro de dépôt international: PCT/EP2019/071540
(87) Numéro de publication internationale: WO 2020/038748

(56) Documents cités:
- EP-A1- 1 247 741
- EP-A2- 0 260 442
- WO-A1-2010/111364
- US-A- 5 949 370
- US-A- 6 076 773
- US-A1- 2014 097 981
- US-A1- 2016 325 856
- US-A1- 2017 158 357
- US-B1- 10 053 240

## Description

La présente invention se situe dans le domaine des véhicules spatiaux, et plus particulièrement dans le domaine des satellites destinés à être mis en orbite.

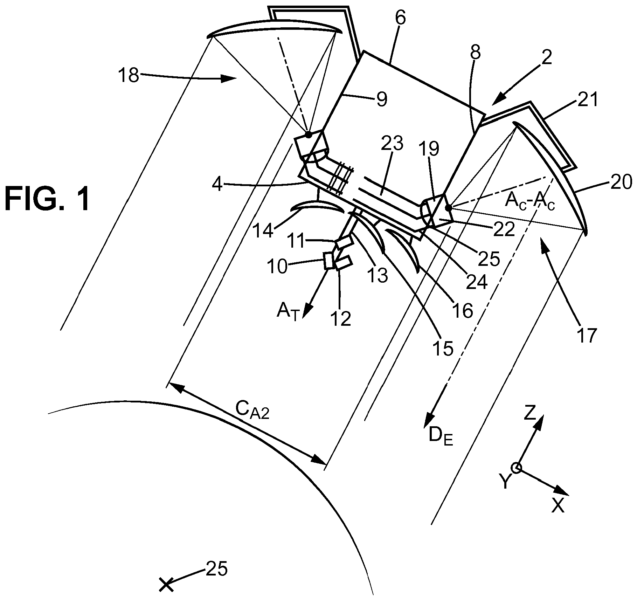

Les véhicules spatiaux comprennent classiquement une structure formant support pour les équipements du véhicule spatial. Un exemple d'une structure de support communément utilisé est représenté sur la figure 1 lorsque le véhicule spatial est dans une orbite géostationnaire. Cette structure de support 2 de forme parallélépipédique, présente un mur plan dirigé vers la terre généralement appelé mur Terre 4, un mur plan opposé généralement appelé mur anti-Terre 6, et quatre murs latéraux appelés mur Nord, mur Sud, mur Est 8 et mur Ouest 9. Les murs Nord et Sud ne sont pas représentés sur la figure 1. Les murs Nord, Sud, Est 8 et Ouest 9 sont parallèles à un axe A_{T} visant la Terre. Le mur Terre 4 porte des antennes de communication auxiliaires. Chaque antenne de communication auxiliaire comporte une source 10,11,12 montée sur une structure 13 et des réflecteurs 14,15,16 portés par le mur Terre 4. Les murs latéraux Nord et Sud portent des radiateurs principaux et des panneaux solaires. Les murs latéraux Est 8 et Ouest 9 portent une antenne de communication principale Est 17 et une antenne de communication principale Ouest 18. Seule l'antenne de communication principale Est 17 est décrite en détail.

L'antenne de communication Est 17 comprend une source 19 et un réflecteur 20 porté par un bras mobile 21. La source 19 est constituée par un ensemble d'éléments rayonnants 22. Les éléments rayonnants 22 sont aptes à émettre ou à recevoir des ondes radiofréquences ayant pour centre les points de la droite passant par l'axe central de rayonnement A_{C}-A_{C} de chaque élément rayonnant. Les éléments rayonnants 22 sont refroidis par des caloducs 23 (ou une boucle thermique) reliés à un radiateur principal. Les caloducs 23 présentent chacun au moins deux coudes 24, 25 afin d'être en contact thermique direct avec les éléments rayonnants 22. Le réflecteur 20 réfléchit vers la Terre 26 les ondes radiofréquences provenant de la source 19 et réceptionne des ondes radiofréquences provenant de la Terre 26. A cet effet, le bras mobile 21 de l'antenne de communication Est 17 est conformé de manière à ce que la direction d'émission/réception D_{E} du réflecteur 20 soit parallèle au plan formé par le mur Est 8, et les éléments rayonnants 22 sont fixés au mur Est 8 de manière à ce que leur axe central de rayonnement A_{C}-A_{C} respectif forme un angle d'environ 45° avec le mur Est 8. Le réflecteur 20 et les éléments rayonnants 22 de l'antenne de communication Ouest 18 sont orientés de la même manière par rapport au mur Ouest 9.

Avec un tel agencement, des phénomènes de réflexion parasite peuvent se produire. Ces phénomènes de réflexion parasite proviennent de la réflexion des ondes sur les murs Est 8 et Ouest 9 et de la recombinaison de ces ondes réfléchies avec les ondes transmises. Ces phénomènes de réflexion parasite peuvent détériorer la qualité des signaux transmis (ou des signaux réceptionnés) Autres exemples de l'art antérieur sont divulgués dans les documents EP 0260442 A2, US 6076773 A et US 2017/158357 A1.

Un premier but de la présente invention est de proposer un véhicule spatial propre à transmettre (et/ou à réceptionner) des ondes radiofréquences de meilleure qualité et qui sont notamment moins affectées par les phénomènes de réflexion parasite.

Un deuxième but de la présente invention est de proposer un véhicule spatial ayant un plus grand champ de vue et pouvant ainsi transmettre (ou réceptionner) des ondes radiofréquences sur une plus grande zone de la Terre.

Un troisième but de la présente invention est de proposer un véhicule spatial plus facile à fabriquer.

Un quatrième but de la présente invention est de proposer un véhicule spatial ayant un dispositif de refroidissement des éléments rayonnants plus efficace.

Un cinquième but de la présente invention est de proposer un véhicule spatial ayant un dispositif de refroidissement des éléments rayonnants plus facile à fixer.

A cet effet, la présente invention a pour un véhicule spatial comprenant :
- une structure de support ayant deux murs de base disposés parallèlement et à distance l'un de l'autre et au moins trois murs latéraux plans fixés aux murs de base,
- au moins une antenne de communication principale comprenant :
   ∘ au moins un élément rayonnant porté par au moins un mur latéral plan, ledit au moins un élément rayonnant ayant un axe central de rayonnement, ledit au moins un élément rayonnant étant apte à émettre ou recevoir des ondes radiofréquences,
   ∘ un bras mobile apte à se déplacer entre une position déployée et une position repliée,
   ∘ un réflecteur porté par le bras mobile, ledit réflecteur étant propre à réfléchir ou à recevoir des ondes radiofréquences selon une direction d'émission, lorsque le bras mobile est dans une position déployée,
caractérisé en ce que ledit au moins un élément rayonnant est fixé à au moins un mur latéral de manière à ce que l'axe central de rayonnement de l'élément rayonnant soit agencé perpendiculairement audit au moins un mur latéral portant ledit au moins un élément rayonnant, et en ce que le bras mobile est conformé de manière à ce qu'un angle de décalage compris entre 25° et 65° soit formé entre ledit au moins un mur latéral portant ledit au moins un élément rayonnant et la direction d'émission, lorsque le bras mobile est dans une position déployée.

Dans les revendications dépendantes des modes particuliers de réalisation sont divulgués.

L'invention concerne également un lanceur selon la revendication 15.

L'invention concerne également un empilement de véhicules spatiaux selon la revendication 16.

L'invention sera mieux comprise à la lecture de la description qui va suivre, donnée uniquement à titre d'exemple et faite en se référant aux figures sur lesquelles :
- la figure 1 est une vue en coupe schématique représentant un véhicule spatial selon l'état de la technique en orbite géostationnaire autour de la Terre, le plan de coupe étant réalisé selon un plan parallèle au mur Nord ;
- la figure 2 est une vue en coupe schématique représentant un véhicule spatial selon un premier mode de réalisation de l'invention en orbite géostationnaire autour de la Terre, le plan de coupe étant parallèle aux murs de base ;
- la figure 3 est une vue en perspective d'un véhicule spatial selon un premier mode de réalisation de l'invention ;
- la figure 4 est une vue en perspective en partie coupée du véhicule spatial représenté sur la figure 3 ;
- la figure 5 est une vue en perspective d'une partie d'un dispositif thermique, d'un mur latéral et d'un boîtier source ;
- la figure 6 est une vue en perspective d'un empilement de deux véhicules spatiaux selon l'invention et d'une coiffe représentée en transparence ;
- la figure 7 est une vue en perspective d'un empilement de deux véhicule spatiaux selon l'état de la technique et d'une coiffe représentée en transparence ;
- la figure 8 est une vue en coupe d'une première variante de la structure de renfort du véhicule spatial selon le premier mode de réalisation de l'invention, le plan de coupe étant parallèle aux murs de base ;
- la figure 9 est une vue en coupe d'une deuxième variante de la structure de renfort du véhicule spatial selon le premier mode de réalisation de l'invention, le plan de coupe étant identique au plan de coupe de la figure 8;
- la figure 10 est une vue en perspective d'une partie d'un véhicule spatial selon un deuxième mode de réalisation de l'invention , dans laquelle un radiateur auxiliaire déployable est disposé dans une position repliée;
- la figure 11 est une vue en perspective du véhicule spatial selon le deuxième mode de réalisation de l'invention dans laquelle
- un radiateur auxiliaire déployable est disposé dans une position déployée;
- la figure 12 est une vue en perspective d'un véhicule spatial selon un troisième mode de réalisation de l'invention ;
- la figure 13 est une vue en coupe du véhicule spatial selon le troisième mode de réalisation de l'invention, le plan de coupe étant parallèle au mur de base;
- la figure 14 est une vue en perspective d'un véhicule spatial selon un quatrième mode de réalisation de l'invention ;
- la figure 15 est une vue en coupe du véhicule spatial selon le quatrième mode de réalisation de l'invention, le plan de coupe étant parallèle au mur de base;
- la figure 16 est une vue en perspective d'un véhicule spatial selon un cinquième mode de réalisation de l'invention ;
- la figure 17 est une vue en coupe du véhicule spatial selon le cinquième mode de réalisation de l'invention, le plan de coupe étant parallèle au mur de base;
- la figure 18 à 20 sont des vues en coupe d'un véhicule spatial selon un sixième, septième et respectivement huitième modes de réalisation de l'invention, le plan de coupe étant parallèle au mur de base;
- la figure 21 est une vue en perspective d'un véhicule spatial selon un neuvième mode de réalisation de l'invention ; et
- la figure 22 est une vue en perspective d'un véhicule spatial selon un dixième mode de réalisation de l'invention.

Le terme « véhicule spatial » désigne dans la présente demande de brevet tout système destiné à fonctionner en orbite dans l'espace exoatmosphérique et susceptible de transporter des équipements. Il peut être muni de moyens de propulsion qui lui sont propres, ou être destiné à être simplement largué en un point de l'espace dans l'attente d'être ensuite récupéré par d'autres moyens spatiaux. Il peut être mis en orbite sur une orbite géostationnaire ou sur tout autre type d'orbite.

Dans le texte ci-dessous, le terme « en contact direct » signifie qu'il n'y pas de pièce intermédiaire ou d'espace vide entre les éléments.

Le véhicule spatial 28 selon la présente invention comporte au moins un mur latéral orienté selon un angle α de 45 ° par rapport à un axe visant la Terre 26, généralement appelé axe A_{T} de visée de la Terre.

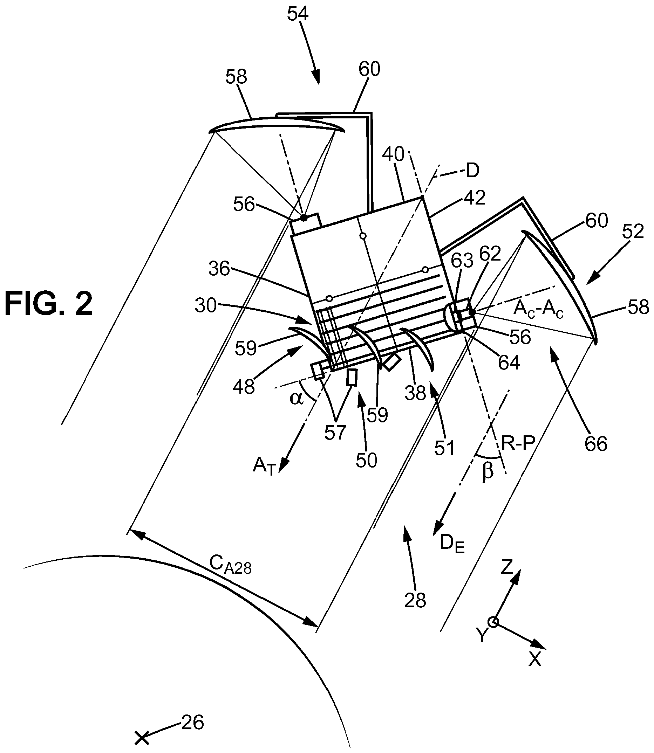

En référence aux figures 2 à 5, le véhicule spatial 28 selon un premier mode de réalisation comprend une structure de support 30 de forme générale parallélépipédique carré. Cette structure de support présente un premier 32 et un deuxième 34 murs de base plans, et quatre murs latéraux plans 36, 38, 40, 42. La structure de support 30 présente une section polygonale, et une particulier une section carré, dans un plan de section parallèle aux murs de base 32, 34.

Les premier 32 et deuxième 34 murs de base sont disposés parallèlement et à distance l'un de l'autre. Ils portent des radiateurs principaux 44, 46 pour refroidir la charge utile et des panneaux solaires non représentés sur les figures.

Les quatre murs latéraux 36,38,40,42 sont fixés perpendiculairement les uns aux autres de manière à ce que la structure de support 30 présente une section carrée dans un plan de section (X, Z). Le plan de section (X, Z) est parallèle aux murs de base 32,34.

Deux murs latéraux 36,38 contigus et directement fixés l'un à l'autre sont dirigés dans la direction de la Terre 26. Ils sont appelés murs latéraux inférieurs dans la suite de la description. Les deux autres murs latéraux 40,42 contigus et directement fixés l'un à l'autre sont dirigés dans la direction opposée de la Terre 26. Ils sont appelés murs latéraux supérieurs dans la suite de la description.

Comme visible sur la figure 2, une fois en orbite, le véhicule spatial 28 selon ce premier mode de réalisation est positionné en oblique par rapport à sa position usuelle illustrée sur la figure 1. Ainsi, en orbite, les quatre murs latéraux 36,38,40,42 du véhicule spatial selon le premier mode de réalisation sont orientés avec un angle α de 45° par rapport à l'axe A_{T} de visée de la Terre. Dans cette position, une diagonale D reliant deux coins opposés de la section carrée formée par la structure de support 30 est confondue avec l'axe A_{T} de visée de la Terre.

Le véhicule spatial 28 comporte des antennes de communication principales 52,54 portées par les murs latéraux supérieurs 40, 42 et des antennes de communication auxiliaires 48,50,51 portées par les murs latéraux inférieurs 36,38.

Les antennes de communication principales 52,54 sont identiques l'une à l'autre. Seule l'antenne de communication principale 52 sera décrite en détail. Mais il est à noter que, sans perte de généralité, l'invention peut également comprendre deux antennes différentes.

L'antenne de communication principale 52 comprend un boîtier source 56, un réflecteur 58 apte à transmettre ou à réceptionner des ondes radiofréquences et un bras mobile 60 portant le réflecteur 58.

Le boîtier source 56 d'une antenne de communication principale 52 est fixé au mur latéral supérieur 42. Le boîtier source 56 de l'autre antenne de communication principale 54 est fixé au mur latéral supérieur 40 qui jouxte et qui est directement fixé au mur latéral supérieur 42.

Le boîtier source 56 comprend des éléments rayonnants 62 propres à générer des ondes radiofréquences à partir d'un signal électrique et à les transmettre vers le réflecteur 58.

Avantageusement, le boîtier source 56 est de type actif c'est-à-dire qu'il comprend des composants d'amplification 63 adaptés pour amplifier le signal électrique avant sa transmission aux éléments rayonnants.

Notez que pour des raisons de simplification des figures, un seul élément rayonnant 62 et un seul composant électronique d'amplification 63 ont été représenté de façon schématique sur la figure 2.

Les éléments rayonnants 62 sont, par exemple, des hélices, des cornets, des patchs ou des dipôles. Ils présentent un axe central de rayonnement Ac-Ac dirigé vers le réflecteur 58. Les éléments rayonnants 62 sont fixés au mur latéral supérieur 42 de manière à ce que leur axe central de rayonnement Ac-Ac respectif soit agencé perpendiculairement au plan P-P formé par le mur latéral 42 les portant.

De préférence, le boîtier source 56 est fixé attenant au bord périphérique 64 du mur latéral supérieur 42, ledit mur latéral supérieur 42 étant assemblé au bord du mur latéral inférieur 38.

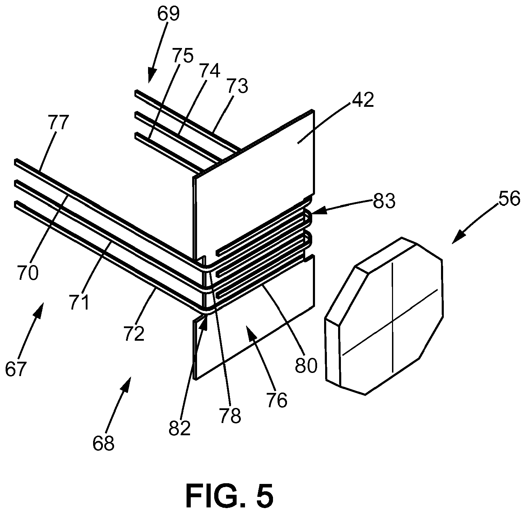

Le bras mobile 60 est monté sur le mur latéral supérieur 42. Il est propre à se déplacer entre une position dite position repliée, dans laquelle le réflecteur 58 est plié contre la structure de support 30 comme illustrée sur la figure 5, et une position dite position déployée dans laquelle le bras mobile est déployé au maximum possible de sa course comme illustrée sur la figure 2.

Lorsque le réflecteur 58 est dans une position déployée, il est apte à transmettre ou à réceptionner un champ 66 d'ondes radiofréquences selon une direction d'émission D_{E}. La direction d'émission D_{E} est parallèle à l'axe de visée de la Terre A_{V}.

Le bras mobile 60 des antennes de communication principales 52,54 est conformé de manière à ce que un angle de décalage β soit égal à 45°, lorsqu'il est dans une position déployée, étant entendu que le terme « angle de décalage β » désigne dans la présente description, l'angle défini entre le plan P-P formé par le mur latéral supérieur 42 et la direction d'émission D_{E} des ondes radiofréquences transmises par le réflecteur 58, lorsque le bras mobile 60 est dans une position déployée.

Avantageusement, cette configuration de l'arbre mobile 60 associée au positionnement des éléments rayonnants 62 avec leurs axes de rayonnement centraux Ac-Ac respectifs perpendiculaires au mur latéral supérieur 42, permet de limiter les phénomènes de réflexion parasite. En effet, dans cette configuration, une partie des murs latéraux supérieurs 40,42 et une partie des murs latéraux inférieurs 36,38 sont plus éloignées du champ 66 d'ondes radiofréquences émis ou réceptionné par le réflecteur 60.

Les antennes de communication auxiliaires 48,50,51 sont similaires antennes de communication principales 52,54 à l'exception du fait que leurs réflecteurs 59 présentent un diamètre inférieur au diamètre des réflecteurs 58 des antennes de communication principales et au fait que leurs boitiers sources 57 et leur bras mobile 61 soient fixés aux murs latéraux inférieurs 36,38.

Le positionnement des éléments rayonnants 62 des antennes principales, la configuration du bras mobile 60 des antennes principales et l'orientation en oblique du véhicule spatial 28 en résultant permettent aux antennes auxiliaires de disposer d'une plus grande surface C_{A28} disponible pour émettre des données. Cette surface disponible pour émettre est appelée champ de vue C_{A28} dans la présente demande de brevet. En effet, en comparant les figures 1 et 2, on peut constater que dans le véhicule spatial 28 selon le premier mode de réalisation de l'invention, le champ de vue C_{A28} est supérieur au champ de vue C_{A2} des antennes de communication auxiliaires 10,14 ; 11,15 ; 12,16 du véhicule spatial selon l'Etat de la technique. En conséquence, le véhicule spatial selon ce premier mode de réalisation de l'invention permet de transmettre des données sur une plus grande zone de la Terre 26.

De plus, avantageusement, dans véhicule spatial 28 selon l'invention, les boitiers sources 57 et/ou les réflecteurs 59 des antennes de communication auxiliaires sont fixés à proximité de la structure de support 30 alors que dans le véhicule spatial selon l'état de la technique visible sur la figure 1, les boîtiers sources 10,11,12 des antennes de communication auxiliaires sont montés sur une structure 13 en saillie par rapport à la structure de support. Il en résulte une pénalité de masse et de surcoût de fabrication du véhicule spatial par rapport à l'invention.

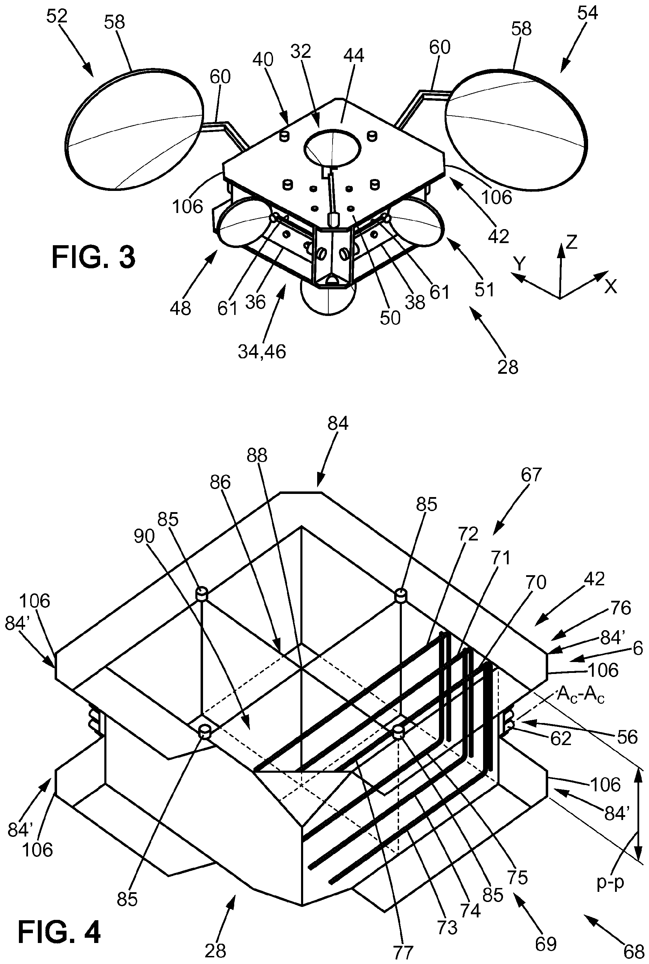

En référence aux figures 4 et 5, le véhicule spatial 28 selon le premier mode de réalisation de l'invention comporte en outre un dispositif de transfert thermique 68 comprenant des équipements de transport de chaleur par fluide propres à transmettre la chaleur dissipée par la charge utile vers les radiateurs principaux 44, 46, et des équipements de transport de chaleur par fluide propre à transmettre la chaleur dissipée par les éléments rayonnants 62 et les composants électroniques d'amplification 63 vers les radiateurs principaux 44, 46.

Dans l'exemple de véhicule spatial selon le premier mode de réalisation illustré sur la figure 4, on a représenté un premier 67 et un deuxième 69 ensembles de trois équipements de transport 70 à 72 et 73 à 75 propres à refroidir le boîtier source 56 fixé sur le mur latéral supérieur 42. Sur cette figure, les équipements de transport destinés à refroidir le boîtier source 56 fixé sur l'autre mur latéral supérieur 40, n'ont pas été représentés pour des raisons de simplification des dessins. Le premier ensemble 67 d'équipements de transport est en contact thermique direct avec le premier mur de base 32 et le deuxième ensemble 69 d'équipements de transport est en contact thermique direct avec le deuxième mur de base 34.

Le refroidissement des éléments rayonnants 62 et des composants électroniques 63 par des radiateurs principaux 44, 46 ayant des orientations opposées permet à la fois d'assurer une fonction de redondance dans le refroidissement et permet aussi d'obtenir un refroidissement maximum quel que soit la position du soleil par rapport au véhicule spatial en couplant les faces Nord et Sud.

Seul l'équipement de transport 70 sera décrit en détail.

L'équipement de transport 70 est, par exemple, constitué par un caloduc.

L'équipement de transport 70 présente une forme de L ayant une branche s'étendant sur la face interne du premier mur de base 32 et une branche s'étendant sur la face externe 76 du mur latéral supérieur 42.

En particulier, en référence à la figure 5, l'équipement de transport 70 est pourvu d'une première partie rectiligne 77, d'une unique partie coudée 78 et d'une deuxième partie rectiligne 80.

La première partie rectiligne 77 est en contact thermique direct avec le premier mur de base 32 portant le radiateur principal 44. La partie coudée 78 est engagée dans une première découpe latérale 82 formée dans le mur latéral supérieur 42. La deuxième partie rectiligne 80 est en contact thermique direct avec, d'un côté, les éléments rayonnants 62 et les composant électroniques d'amplification 63 du boitier source 56 et avec, de l'autre côté, la face externe 76 du mur latéral supérieur 42 portant les éléments rayonnants.

De la même manière, les parties coudées 78 des équipements de transport 73 à 75 du deuxième ensemble 69 sont engagées dans une découpe latérale 83 agencée sur le bord opposé du mur latéral supérieur 42. Les équipements de transport 73 à 75 du deuxième ensemble 69 sont avantageusement positionnés alternativement entre les équipements de transport 70 à 73 du premier ensemble 67.

Comme les équipements de transport 70 à 75 sont en contact direct des éléments rayonnants 62 et des composants électroniques d'amplification 63, ils sont très efficaces et permettent d'évacuer efficacement une grande quantité de puissance dissipée. Cet agencement permet aux antennes de communications principales 52,54 de transmettre des ondes radiofréquences dans des bandes de fréquences élevées telles que par exemple en bande Ka, Q, V ou W. En effet, de manière générale, la distance entre les éléments rayonnants 62 est déterminée en fonction de la longueur des ondes radiofréquences émises par les éléments rayonnants. Lorsque les éléments rayonnants 62 doivent émettre des ondes radiofréquences dans des bandes de fréquences élevées, les éléments rayonnants 62 doivent être disposés les uns proches des autres. Toutefois, cette proximité entre les éléments rayonnants 62 accroit la densité de puissance dissipée par les amplificateurs qui émettent les ondes radiofréquences. Avantageusement, les équipements de transport 70 à 75 du véhicule spatial selon le premier mode de réalisation de l'invention permettent de transporter efficacement de grande quantité de chaleur vers les deux radiateurs principaux 44,46.

Avantageusement, les équipements de transport 70 à 75 présentent tous une même forme en L de sorte que leur fabrication peut être standardisée. Il en résulte une diminution des coûts de fabrication de ceux-ci.

Avantageusement également, la forme des équipements de transport 70 à 75 est simple. Elle comprend un unique coude de sorte que la circulation du fluide à l'intérieur de ceux-ci est facilitée. Il en résulte un transport de chaleur plus efficace.

En référence aux figures 3 et 4, les radiateurs principaux 44,46 du véhicule spatial selon le premier mode de réalisation présentent la forme générale d'un parallélépipède plan ayant quatre coins 84 tronqués. En particulier, la forme de la face principale de ces radiateurs principaux 44,46 est un carré ayant deux coins 84,84' tronqués définissant des bords latéraux 106. Les au moins deux coins 84' tronqués sont les coins situés dans le champ 66 d'ondes radiofréquences. La bissectrice de ces coins 84' est sensiblement perpendiculaire à la direction d'émission D_{E}. Le plan de coupe des coins 84' et le bord latéraux 106 en résultant sont parallèles à la direction d'émission D_{E}.

Avantageusement, la présence de coins tronqués 84' permet de monter sur le véhicule spatial 28 selon le premier mode de réalisation des radiateurs d'une taille supérieure à la taille de la section carré de la structure support 30 et donc d'augmenter la capacité de réjection thermique du véhicule spatial 28 tout en ayant des réflecteurs 58 de grand diamètre pour transmettre des ondes radiofréquences sur une zone importante de la Terre 26.

En référence à la figure 4, le véhicule spatial 28 comporte quatre poteaux 85 s'étendant selon une direction perpendiculaire aux murs de base 32,34, et une structure de renfort 86 reliant rigidement les quatre poteaux à un même centre 88.

Les quatre poteaux 85 sont répartis au sommet d'un parallélogramme et en particulier d'un carré. Les poteaux 85 sont positionnés au milieu des murs latéraux 36, 38, 40,42 et sont chacun fixés contre un mur latéral. La structure de renfort 86 comporte quatre entretoises 90. Chaque entretoise 90 s'étend entre un poteau 85 et le centre 88.

Avantageusement, les poteaux 85 et la structure de renfort 86 permettent de rigidifier et de renforcer la tenue mécanique du véhicule spatial dans une direction perpendiculaire aux murs de base 32, 34.

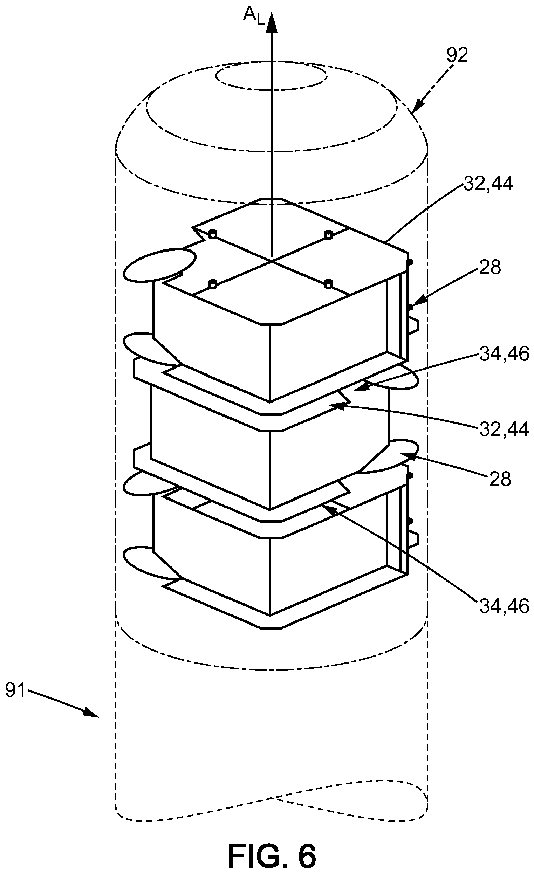

Ainsi, en référence à la figure 6, les véhicules spatiaux 28 selon le premier mode de réalisation de l'invention sont empilés dans la coiffe 92 d'un lanceur 91 avec leurs radiateurs principaux 44, 46 disposés perpendiculaire à la direction de lancement A_{L} du lanceur.

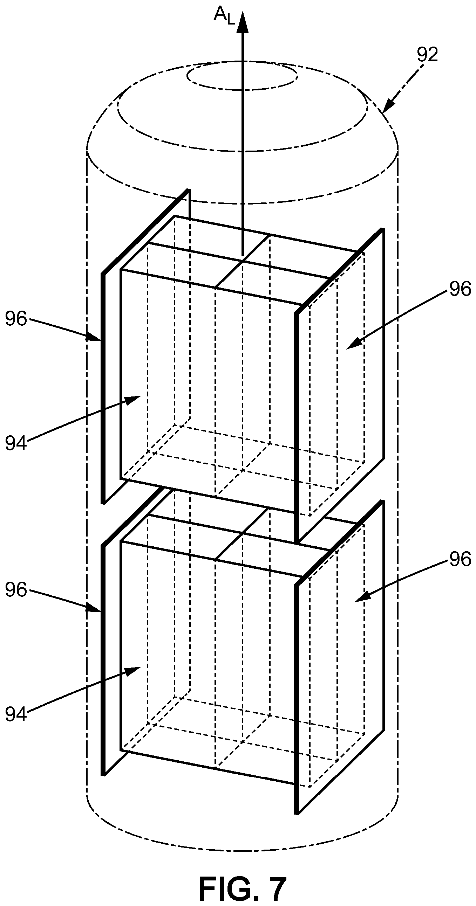

Avantageusement, cette nouvelle orientation des véhicules spatiaux à l'intérieur de la coiffe 92 permet d'empiler un plus grand nombre de véhicules spatiaux selon la direction de lancement A_{L} du lanceur comme visible en comparant l'empilement de véhicules spatiaux 94 selon l'état de la technique illustré sur la figure 7 et l'empilement de véhicules spatiaux 28 selon le premier mode de réalisation de l'invention illustré sur la figure 6. Sur la figure 7, les véhicules spatiaux 94 sont empilés de sorte que leurs radiateurs principaux 96 soient dans un plan parallèle à la direction de lancement A_{L}.

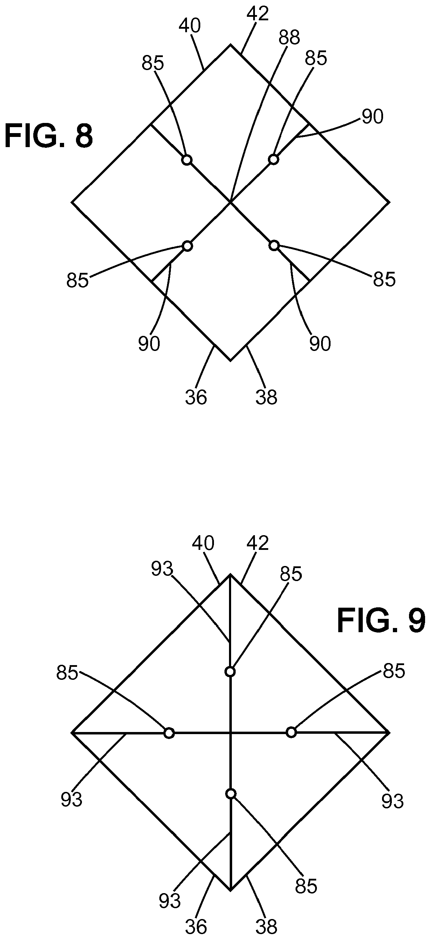

En variante, les poteaux 85 sont fixés à mi-distance entre le centre 88 et les murs latéraux 36, 38, 40, 42, comme illustré sur la figure 8.

Selon une autre variante illustrée sur la figure 9, les entretoises 90 s'étendent entre les coins 93 de la structure de support 30 et le centre 88. Dans cette variante, les poteaux 85 sont fixés à mi-distance entre les coins 93 et le centre 88. Selon une variante moins avantageuse, l'angle de décalage β est compris entre 35° et 55°.

Selon une autre variante, l'angle de décalage β est compris entre 25° et 65°.

En variante, l'extrémité proximale des bras mobiles n'est pas est fixée au mur latéral supérieur mais à un autre mur tel que à un mur de base ou à un mur latéral inférieur.

En variante, le boîtier source 56 n'est pas de type « actif » c'est-à-dire qu'il ne comprend que des éléments rayonnants 62 et pas de composants électroniques d'amplification.

En variante, le boîtier source comporte un seul élément rayonnant.

En variante, les équipements de transport 70 sont constitués par une boucle thermique ou plusieurs.

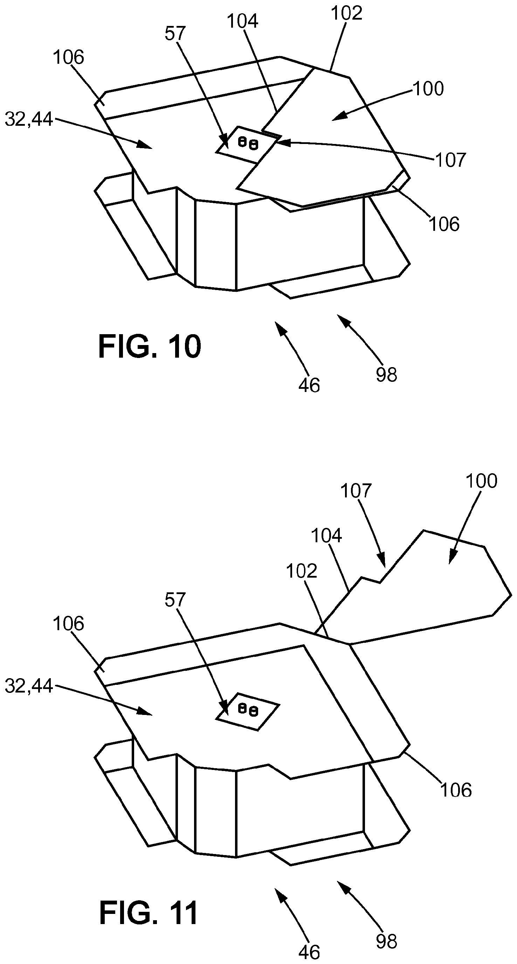

La figure 10 représente un véhicule spatial 98 selon un deuxième mode de réalisation de la présente invention. Le véhicule spatial 98 selon ce deuxième mode de réalisation est identique au véhicule spatial 28 selon le premier mode de réalisation à l'exception du fait qu'il comporte un ou deux radiateur(s) auxiliaire(s) 100 fixé(s) au radiateur principal 44et un ou deux radiateurs auxiliaires 100 fixé(s) au radiateur principal 46 . Le véhicule spatial 98 selon le second mode de réalisation ne sera pas décrit en détail. Seules ces différences par rapport au véhicule spatial 28 selon le premier mode de réalisation seront décrites.

Sur les figures 10 et 11, un seul radiateur auxiliaire 100 a été représenté pour simplifier les figures..

Le radiateur auxiliaire 100 présente une forme générale d'un triangle. Le but étant de maximiser la surface compte-tenu des équipements présents sur le mur 32. En particulier, dans le mode de réalisation représenté sur les figures 10, 11, le radiateur auxiliaire 100 présente la forme générale d'un triangle isocèle puisque les bords latéraux 106 sont de même longueur Ce radiateur auxiliaire 100 peut comporter au moins un sommet tronqué délimitant un bord 102 fixé de manière pivotante au radiateur principal 44, de sorte à laisser la place pour l'axe d'un mécanisme d'entrainement d'un panneau solaire -non représenté- orienté selon une direction perpendiculaire au radiateur principal 44

Le radiateur auxiliaire 100 pivote entre une position repliée et une position dépliée. En position repliée, le radiateur auxiliaire 100 est disposé parallèlement et au-dessus du radiateur principal 44, comme représenté sur la figure 10. Le radiateur auxiliaire 100 est ainsi positionné à distance du radiateur principal 44 selon une direction perpendiculaire au radiateur principal 44. En position dépliée, le radiateur auxiliaire 100 s'étend sensiblement le prolongement du radiateur principal 44, comme représenté sur la figure 11.

Dans le mode de réalisation représenté sur les figures 10 et 11, les deux autres sommets du radiateur auxiliaire 100 sont également tronqués afin de de ne pas interférer avec les antennes radiofréquences.

En particulier, avantageusement, le radiateur auxiliaire 100 ne s'étend pas latéralement au-delà du bord latéral 106 du radiateur principal pour ne pas s'étendre dans le champ 66 d'ondes radiofréquences des réflecteurs 58.

Le bord latéral 104 de plus grande longueur du radiateur auxiliaire 100 s'étend le long d'une diagonale du radiateur principal 44. Ce bord latéral 104 présente avantageusement une découpe 107 pour accommoder les propulseurs 57 agencé sur le mur de base 32. D'autres découpes -non représentées peuvent être présentes pour accommoder d'autres équipements montés sur le mur 34, tels des senseurs de contrôle d'attitude.

Avantageusement, ces radiateurs auxiliaires 100 peuvent être déployé, lorsque le générateur solaire -non représenté- est déployé et tourne en fonction de l'orientation du soleil.

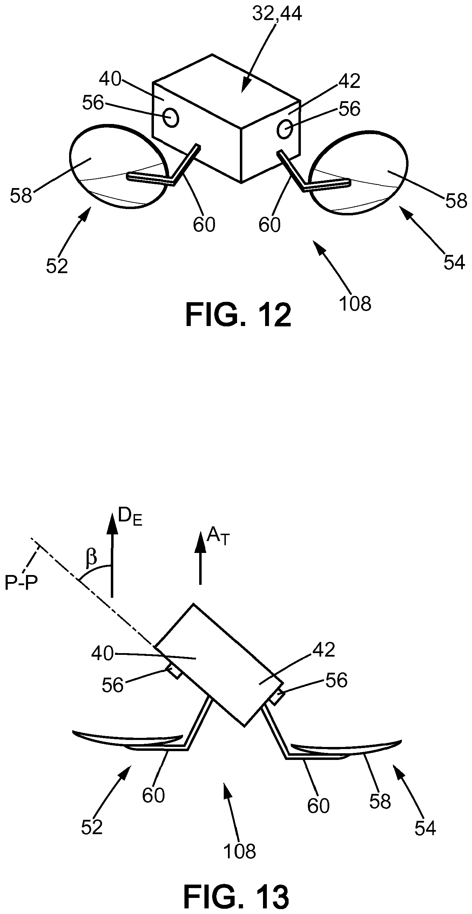

Les figures 12 et 13 représentent un véhicule spatial 108 selon un troisième mode de réalisation de l'invention. Le véhicule spatial 108 selon ce troisième mode de réalisation est identique au véhicule spatial 28 selon le premier mode de réalisation à l'exception du fait que la structure de support 30 présente une section rectangulaire dans un plan de section parallèle aux murs de base 32, 34.

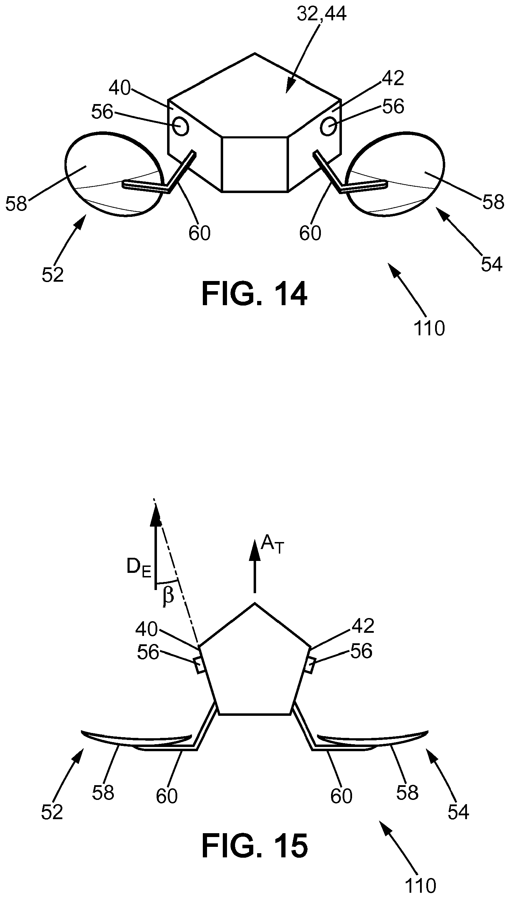

Les figures 14 et 15 représentent un véhicule spatial 110 selon un quatrième mode de réalisation de l'invention. Le véhicule spatial 110 selon ce quatrième mode de réalisation est identique au véhicule spatial 28 selon le premier mode de réalisation à l'exception du fait que la structure de support 30 présente une section pentagonale dans un plan de section parallèle aux murs de base 32, 34.

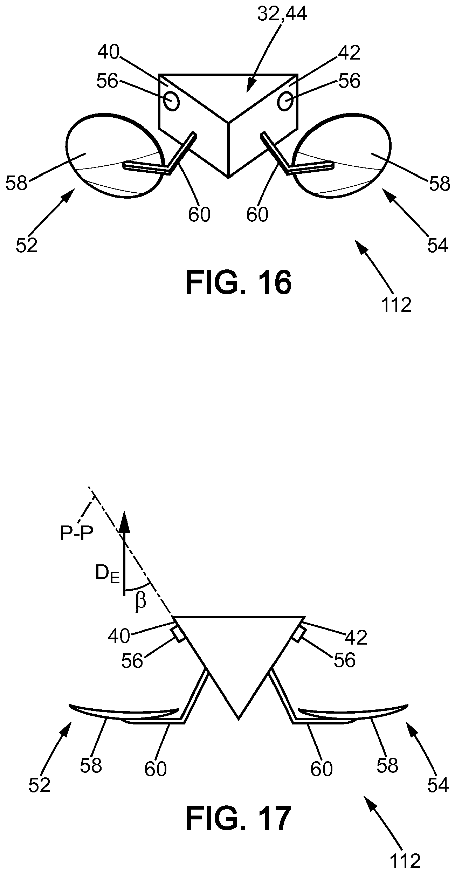

Les figures 16 et 17 représentent un véhicule spatial 112 selon un cinquième mode de réalisation de l'invention. Le véhicule spatial 112 selon ce cinquième mode de réalisation est identique au véhicule spatial 28 selon le premier mode de réalisation à l'exception du fait que la structure de support 30 présente une section triangulaire dans un plan de section parallèle aux murs de base 32, 34.

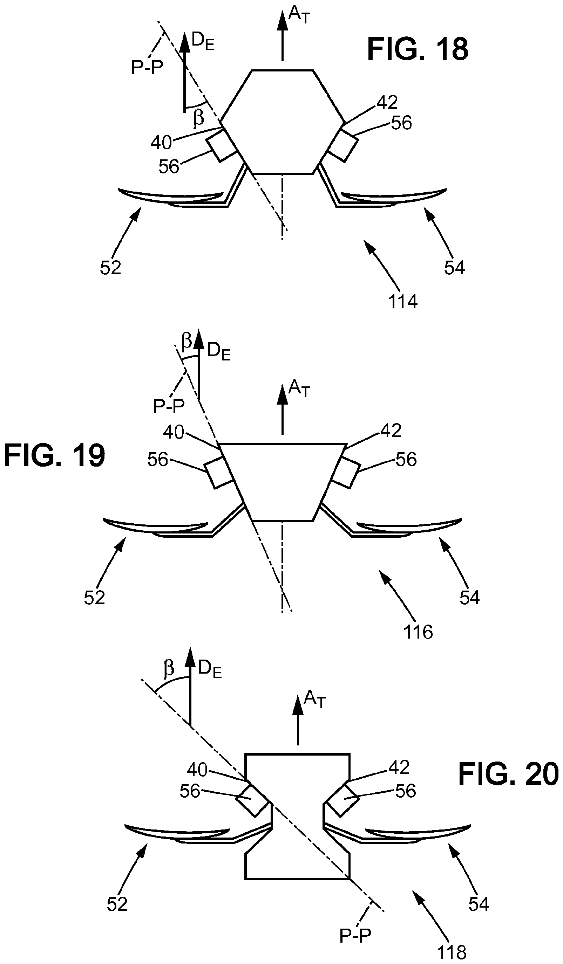

La figure 18 représente un véhicule spatial 114 selon un sixième mode de réalisation de l'invention. Le véhicule spatial 114 selon ce sixième mode de réalisation est identique au véhicule spatial 28 selon le premier mode de réalisation à l'exception du fait que la structure de support 30 présente une section hexagonale dans un plan de section parallèle aux murs de base 32, 34.

La figure 19 représente un véhicule spatial 116 selon un septième mode de réalisation de l'invention. Le véhicule spatial 116 selon ce septième mode de réalisation est identique au véhicule spatial 28 selon le premier mode de réalisation à l'exception du fait que la structure de support 30 présente une section trapézoïdale dans un plan de section parallèle aux murs de base 32, 34.

La figure 20 représente un véhicule spatial 118 selon un huitième mode de réalisation de l'invention. Le véhicule spatial 118 selon ce huitième mode de réalisation est identique au véhicule spatial 28 selon le premier mode de réalisation à l'exception du fait que la structure de support 30 présente une section selon un polygone quelconque dans un plan de section parallèle aux murs de base 32, 34. Ce polygone comporte deux murs latéraux 40, 42 formant des plans définissant un angle de décalage β égal à 45° avec la direction d'émission des réflecteurs 58, lorsque le bras mobile 61 est dans une position déployée. Tout comme pour le premier mode de réalisation du véhicule spatial 28 selon l'invention, la direction d'émission D_{E} est parallèle à l'angle de visée A_{T}, lorsque le véhicule spatial 118 est en orbite et que les bras mobile 61 sont dans une position déployée.

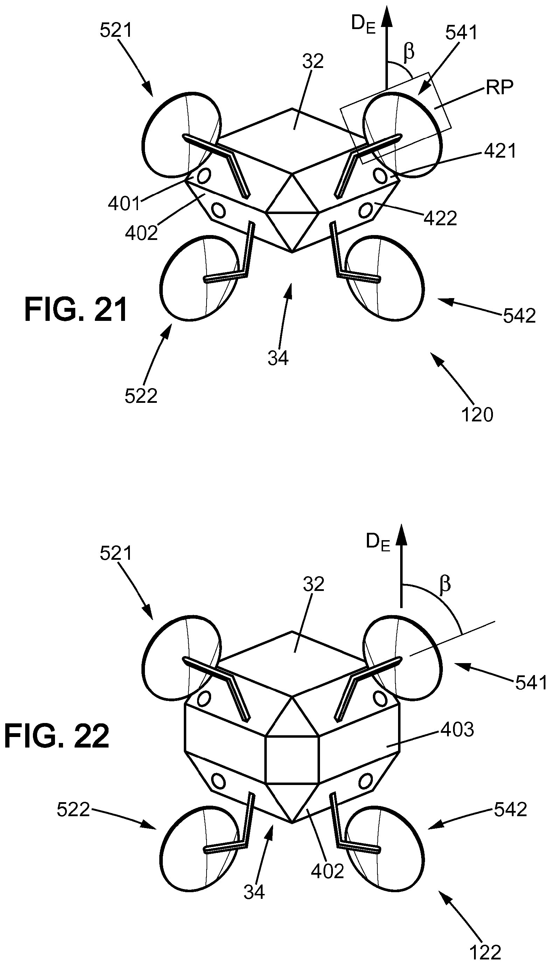

La figure 21 représente un véhicule spatial 120 selon un neuvième mode de réalisation de l'invention. Le véhicule spatial 120 selon le neuvième mode de réalisation est identique au véhicule spatial 28 selon le premier mode de réalisation à l'exception du fait que chaque mur latéral supérieur 40, 42 comprend deux pans de mur 401, 402, 421, 422 fixés l'un à l'autre et formant un angle en V. Chaque pan de mur 401, 402, 421, 422 porte une antenne de communication principale identique aux antennes de communication du véhicule spatial selon le premier mode de réalisation de l'invention.

Chaque pan de mur 401, 402, 421, 422 s'étend dans un plan P-P qui forme avec la direction d'émission D_{E} un angle de décalage β égale à 45°. Lorsque le véhicule spatial 120 est en orbite et que les bras mobiles sont déployés, l'axe de visée de la terre A_{T} est parallèle à l'axe d'émission D_{E}.

La figure 22 représente un véhicule spatial 122 selon un dixième mode de réalisation de l'invention. Le véhicule spatial 122 selon le dixième mode de réalisation est identique au véhicule spatial 28 selon le premier mode de réalisation à l'exception du fait que chaque mur latéral supérieur 40, 42 comprend trois pans de mur 401, 402, 403 ; 421, 422, 423 fixés l'un à l'autre et formant un angle en U. Les pans de mur latéraux 401, 402 ; 421, 422, portent chacun une antenne de communication principale identique aux antennes de communication du véhicule spatial selon le premier mode de réalisation de l'invention.

Les pans de mur latéraux 401, 402, 421, 422 s'étendent dans un plan P-P qui forme avec la direction d'émission D_{E} un angle de décalage β égale à 45°. Lorsque le véhicule spatial 122 est en orbite et que les bras mobiles 61 sont déployés, la direction d'émission D_{E} est parallèle à l'axe de visée de la terre A_{T}.

## Revendications

1. Véhicule spatial (28, 98, 108 à 122) comprenant :
- une structure de support (30) ayant deux murs de base (32,34) disposés parallèlement et à distance l'un de l'autre et au moins trois murs latéraux plans (36,38,40,42) fixés aux murs de base,
- au moins une antenne de communication principale (52,54) comprenant :
o au moins un élément rayonnant (62) porté par au moins un mur latéral plan (36,38,40,42), ledit au moins un élément rayonnant (62) ayant un axe central de rayonnement (A_{C}-A_{C}), ledit au moins un élément rayonnant (62) étant apte à émettre ou recevoir des ondes radiofréquences,
o un bras mobile (60) apte à se déplacer entre une position déployée et une position repliée,
o un réflecteur (58) porté par le bras mobile, ledit réflecteur (58) étant propre à réfléchir ou à recevoir des ondes radiofréquences selon une direction d'émission (D_{E}), lorsque le bras mobile (60) est dans une position déployée,
**caractérisé en ce que** ledit au moins un élément rayonnant (62) est fixé à au moins un mur latéral (36,38,40,42) de manière à ce que l'axe central de rayonnement (A_{C}-A_{C}) de l'élément rayonnant soit agencé perpendiculairement audit au moins un mur latéral (36,38,40,42) portant ledit au moins un élément rayonnant (62), et **en ce que** le bras mobile (60) est conformé de manière à ce qu'un angle de décalage (β) compris entre 25° et 65° soit formé entre ledit au moins un mur latéral (36,38,40,42) portant ledit au moins un élément rayonnant (62) et la direction d'émission (D_{E}), lorsque le bras mobile (60) est dans une position déployée.

2. Véhicule spatial (28, 98, 108 à 122) selon la revendication 1, dans lequel l'angle de décalage (β) est compris entre 35° et 55°.

3. Véhicule spatial (28, 98, 108 à 122) selon la revendication 2, dans lequel l'angle de décalage (β) est égal à 45°.

4. Véhicule spatial (28, 98, 108 à 122) selon l'une quelconque des revendications 1 à 3, dans lequel deux murs latéraux plans (40, 42) contigus et directement fixés l'un à l'autre portent chacun au moins un élément rayonnant (62) ayant un axe central de rayonnement (A_{C}-A_{C}) perpendiculaire au mur latéral (40, 42) qui les porte.

5. Véhicule spatial (28, 98, 108 à 122) selon l'une quelconque des revendications 1 à 4, dans lequel la structure de support (30) comporte quatre murs latéraux plans (36,38,40,42) fixés perpendiculairement les uns aux autres de manière à présenter une section carrée dans un plan de section qui s'étend parallèlement au mur de base (32,34), et dans lequel une diagonale (D) reliant deux coins opposés de ladite section carrée s'étend selon la direction d'émission (D_{E}) du réflecteur (58), lorsque le bras mobile (60) est dans une position déployée.

6. Véhicule spatial (28, 98, 108 à 122) selon l'une quelconque des revendications 1 à 5, qui comporte au moins un radiateur principal (44, 46) porté par un mur de base (32,34) et un dispositif de transfert thermique (68) comprenant au moins un équipement de transport de chaleur (70,71,72,73,74,75) par fluide en forme de L, ledit équipement de transport de chaleur (70,71,72,73,74,75) ayant une première partie rectiligne (77) en contact thermique directe avec le mur de base (32,34) portant le radiateur principal (44, 46), une unique partie coudée (78) et une deuxième partie rectiligne (80) en contact thermique direct avec ledit au moins un élément rayonnant (62) et le mur latéral plan (40,42) portant ledit au moins un élément rayonnant.

7. Véhicule spatial (28, 98, 108 à 122) selon la revendication 6, dans lequel ledit mur latéral plan (40,42) portant ledit au moins un élément rayonnant comporte au moins une découpe latérale (82,83), et dans lequel ladite partie coudée (78) de l'équipement de transport de chaleur est engagée dans ladite découpe latérale (82,83), la deuxième partie rectiligne (80) s'étendant sur une face externe (76) dudit mur latéral plan (40,42) portant ledit au moins un élément rayonnant (62).

8. Véhicule spatial (28, 98, 108 à 122) selon l'une quelconque des revendications 1 à 7, qui comporte au moins un composant électronique d'amplification (63) propre à amplifier des signaux électriques transmis à ledit au moins un élément rayonnement (62), et un boîtier (56) comprenant ledit au moins un élément rayonnement (62) et ledit au moins un composant électronique d'amplification (63).

9. Véhicule spatial (28, 98, 108 à 122) selon l'une quelconque des revendications 1 à 5, qui comporte au moins un radiateur principal (44, 46) porté par un mur de base (32,34) et au moins un radiateur auxiliaire (100) monté pivotant entre une position repliée dans laquelle le radiateur auxiliaire est agencé parallèlement et à côté du radiateur principal (44, 46), et une position dépliée dans laquelle le radiateur auxiliaire (100) s'étend sensiblement dans le prolongement du radiateur principal (44, 46).

10. Véhicule spatial (28, 98, 108 à 122) selon la revendication 9, dans lequel ledit au moins un radiateur auxiliaire (100) présente une forme générale d'un triangle.

11. Véhicule spatial (28, 98, 108 à 122) selon la revendication 10, dans lequel un des sommets du triangle est tronqué et délimite un bord (102) monté pivotant par rapport au radiateur principal (44, 46).

12. Véhicule spatial (28, 98, 108 à 122) selon l'une quelconque des revendications 1 à 5, qui comporte au moins un radiateur principal (44,46) porté par un mur de base (32,34), et dans lequel ledit au moins un radiateur principal (44, 46) comporte au moins trois coins (84, 84') et dans lequel au moins un coin (84) du radiateur principal est tronqué selon un plan de coupe parallèle à la direction d'émission (D_{E}).

13. Véhicule spatial (28, 98, 108 à 122) selon l'une quelconque des revendications 1 à 12, dans lequel la structure de support (28) comporte :
- quatre poteaux (85) s'étendant selon une direction perpendiculaire aux murs de base (32,34), lesdits poteaux (85) étant répartis au sommet d'un parallélogramme, et
- une structure de renfort (86) reliant rigidement les quatre poteaux (85) à un même centre (88).

14. Véhicule spatial (28, 98, 108 à 122) selon l'une quelconque des revendications 1 à 5, dans lequel la structure de support (30) présente une section polygonale, dans un plan de section parallèle au plan du mur de base (32, 34) portant un radiateur principal (44,46), ladite section polygonale étant une section parmi une section triangulaire (112), une section rectangulaire (108), une section carrée (28), une section trapézoïdale(116), une section pentagonale (110), une section hexagonale (114) ou une section selon un polygone quelconque (118).

15. Lanceur (91) comprenant une coiffe (92) et au moins un véhicule spatial (28) sous la coiffe (92) selon l'une quelconque des revendications 1 à 5, qui comporte au moins un radiateur principal (44, 46) porté par un mur de base (32,34), ledit radiateur principal (44, 46) étant agencé perpendiculairement à la direction de lancement (A_{L}).

16. Empilement de véhicules spatiaux (28, 98,108 à122) selon la revendication 13, comprenant au moins deux véhicules (28, 98,108 à122) agencés l'un sur l'autre, chaque poteau (85) d'un premier véhicule (28, 98,108 à122) étant porté par un poteau (85) du deuxième véhicule (28, 98,108 à122), les poteaux (85) de chaque véhicule s'étendant dans une même direction.

## Patentansprüche

1. Raumfahrzeug (28, 98, 108 bis 122), welches umfasst:
- eine Tragstruktur (30), welche zwei Basiswände (32, 34), die parallel und in einem Abstand voneinander angeordnet sind, und wenigstens drei ebene Seitenwände (36, 38, 40, 42), die an den Basiswänden befestigt sind, aufweist,
- wenigstens eine Hauptkommunikationsantenne (52, 54), welche umfasst:
∘ wenigstens einen Strahler (62), der von wenigstens einer ebenen Seitenwand (36, 38, 40, 42) getragen wird, wobei der wenigstens eine Strahler (62) eine zentrale Strahlungsachse (A_{C}-A_{C}) aufweist, wobei der wenigstens eine Strahler (62) in der Lage ist, Hochfrequenzwellen zu senden oder zu empfangen,
∘ einen beweglichen Arm (60), der in der Lage ist, sich zwischen einer ausgefahrenen Position und einer eingeklappten Position zu bewegen,
∘ einen Reflektor (58), der von dem beweglichen Arm getragen wird, wobei der Reflektor (58) dafür eingerichtet ist, Hochfrequenzwellen in einer Senderichtung (D_{E}) zu reflektieren oder zu empfangen, wenn sich der bewegliche Arm (60) in einer ausgefahrenen Position befindet,
**dadurch gekennzeichnet, dass** der wenigstens eine Strahler (62) an wenigstens einer Seitenwand (36, 38, 40, 42) befestigt ist, derart, dass die zentrale Strahlungsachse (A_{C}-A_{C}) des Strahlers senkrecht zu der wenigstens einen Seitenwand (36, 38, 40, 42) angeordnet ist, die den wenigstens einen Strahler (62) trägt, und dadurch, dass der bewegliche Arm (60) derart ausgebildet ist, dass ein Versatzwinkel (β), der zwischen 25° und 65° beträgt, zwischen der wenigstens einen Seitenwand (36, 38, 40, 42), die den wenigstens einen Strahler (62) trägt, und der Senderichtung (D_{E}) gebildet wird, wenn sich der bewegliche Arm (60) in einer ausgefahrenen Position befindet.

2. Raumfahrzeug (28, 98, 108 bis 122) nach Anspruch 1, wobei der Versatzwinkel (β) zwischen 35° und 55° beträgt.

3. Raumfahrzeug (28, 98, 108 bis 122) nach Anspruch 2, wobei der Versatzwinkel (β) gleich 45° ist.

4. Raumfahrzeug (28, 98, 108 bis 122) nach einem der Ansprüche 1 bis 3, wobei zwei aneinander angrenzende und direkt aneinander befestigte ebene Seitenwände (40, 42) jeweils wenigstens einen Strahler (62) mit einer zentralen Strahlungsachse (A_{C}-A_{C}) tragen, die zu der Seitenwand (40, 42), die ihn trägt, senkrecht ist.

5. Raumfahrzeug (28, 98, 108 bis 122) nach einem der Ansprüche 1 bis 4, wobei die Tragstruktur (30) vier ebene Seitenwände (36, 38, 40, 42) aufweist, die senkrecht zueinander befestigt sind, so dass sie in einer Schnittebene, welche sich parallel zu der Basiswand (32, 34) erstreckt, einen quadratischen Querschnitt aufweisen, und wobei eine Diagonale (D), die zwei einander gegenüberliegende Ecken des quadratischen Querschnitts verbindet, sich in der Senderichtung (D_{E}) des Reflektors (58) erstreckt, wenn sich der bewegliche Arm (60) in einer ausgefahrenen Position befindet.

6. Raumfahrzeug (28, 98, 108 bis 122) nach einem der Ansprüche 1 bis 5, welches wenigstens einen Hauptradiator (44, 46), der von einer Basiswand (32, 34) getragen wird, und eine Wärmeübertragungsvorrichtung (68), die wenigstens eine L-förmige Einrichtung zum Wärmetransport (70, 71, 72, 73, 74, 75) mittels Fluid umfasst, aufweist, wobei die Einrichtung zum Wärmetransport (70, 71, 72, 73, 74, 75) einen ersten geraden Teil (77), der sich mit der den Hauptradiator (44, 46) tragenden Basiswand (32, 34) in direktem thermischem Kontakt befindet, einen einzigen abgewinkelten Teil (78) und einen zweiten geraden Teil (80), der sich mit dem wenigstens einen Strahler (62) und der ebenen Seitenwand (40, 42), die den wenigstens einen Strahler trägt, in direktem thermischem Kontakt befindet, aufweist.

7. Raumfahrzeug (28, 98, 108 bis 122) nach Anspruch 6, wobei die ebene Seitenwand (40, 42), die den wenigstens einen Strahler trägt, wenigstens einen seitlichen Ausschnitt (82, 83) aufweist, und wobei der abgewinkelte Teil (78) der Einrichtung zum Wärmetransport in den seitlichen Ausschnitt (82, 83) eingreift, wobei sich der zweite gerade Teil (80) auf einer Außenseite (76) der ebenen Seitenwand (40, 42) erstreckt, die den wenigstens einen Strahler (62) trägt.

8. Raumfahrzeug (28, 98, 108 bis 122) nach einem der Ansprüche 1 bis 7, welches wenigstens ein elektronisches Verstärkungsbauteil (63), das dafür eingerichtet ist, zu dem wenigstens einen Strahler (62) übertragene elektrische Signale zu verstärken, und ein Gehäuse (56), das den wenigstens einen Strahler (62) und das wenigstens eine elektronische Verstärkungsbauteil (63) umfasst, aufweist.

9. Raumfahrzeug (28, 98, 108 bis 122) nach einem der Ansprüche 1 bis 5, welches wenigstens einen Hauptradiator (44, 46) aufweist, der von einer Basiswand (32, 34) getragen wird, und wenigstens einen Hilfsradiator (100), der schwenkbar zwischen einer eingeklappten Position, in welcher de Hilfsradiator parallel zu dem Hauptradiator (44, 46) und neben diesem angeordnet ist, und einer ausgeklappten Position, in welcher sich der Hilfsradiator (100) im Wesentlichen in der Verlängerung des Hauptradiators (44, 46) erstreckt, angebracht ist.

10. Raumfahrzeug (28, 98, 108 bis 122) nach Anspruch 9, wobei der wenigstens eine Hilfsradiator (100) eine allgemeine Form eines Dreiecks aufweist.

11. Raumfahrzeug (28, 98, 108 bis 122) nach Anspruch 10, wobei einer der Eckpunkte des Dreiecks abgeschnitten ist und einen Rand (102) begrenzt, der schwenkbar in Bezug auf den Hauptradiator (44, 46) angebracht ist.

12. Raumfahrzeug (28, 98, 108 bis 122) nach einem der Ansprüche 1 bis 5, welches wenigstens einen Hauptradiator (44, 46) aufweist, der von einer Basiswand (32, 34) getragen wird, und wobei der wenigstens eine Hauptradiator (44, 46) wenigstens drei Ecken (84, 84') aufweist, und wobei wenigstens eine Ecke (84) des Hauptradiators entlang einer Schnittebene abgeschnitten ist, die zu der Senderichtung (D_{E}) parallel ist.

13. Raumfahrzeug (28, 98, 108 bis 122) nach einem der Ansprüche 1 bis 12, wobei die Tragstruktur (28) aufweist:
- vier Pfosten (85), die sich in einer zu den Basiswänden (32, 34) senkrechten Richtung erstrecken, wobei die Pfosten (85) auf die Eckpunkte eines Parallelogramms verteilt sind, und
- eine Verstärkungsstruktur (86), welche die vier Pfosten (85) starr mit ein und demselben Mittelpunkt (88) verbindet.

14. Raumfahrzeug (28, 98, 108 bis 122) nach einem der Ansprüche 1 bis 5, wobei die Tragstruktur (30) in einer Schnittebene, die zur Ebene der einen Hauptradiator (44, 46) tragenden Basiswand (32, 34) parallel ist, einen polygonalen Querschnitt aufweist, wobei der polygonale Querschnitt einer ist von einem dreieckigen Querschnitt (112), einem rechteckigen Querschnitt (108), einem quadratischen Querschnitt (28), einem trapezförmigen Querschnitt (116), einem fünfeckigen Querschnitt (110), einem sechseckigen Querschnitt (114) oder einem Querschnitt gemäß einem beliebigen Vieleck (118).

15. Startvorrichtung (91), welche eine Kappe (92) umfasst, und unter der Kappe (92) wenigstens ein Raumfahrzeug (28) nach einem der Ansprüche 1 bis 5, welches wenigstens einen von einer Basiswand (32, 34) getragenen Hauptradiator (44, 46) aufweist, wobei der Hauptradiator (44, 46) senkrecht zur Startrichtung (A_{L}) angeordnet ist.

16. Stapel von Raumfahrzeugen (28, 98, 108 bis 122) nach Anspruch 13, welcher wenigstens zwei übereinander angeordnete Fahrzeuge (28, 98, 108 bis 122) umfasst, wobei jeder Pfosten (85) eines ersten Fahrzeugs (28, 98, 108 bis 122) von einem Pfosten (85) des zweiten Fahrzeugs (28, 98, 108 bis 122) getragen wird, wobei die Pfosten (85) jedes Fahrzeugs sich in ein und derselben Richtung erstrecken.

## Claims

1. A spacecraft (28, 98, 108 to 122) comprising:
- a support structure (30) having two base walls (32, 34) disposed parallel and at a distance from each other and at least three flat side walls (36, 38, 40, 42) attached to the base walls,
- at least one main communication antenna (52, 54) comprising:
- at least one radiating element (62) carried by at least one flat side wall (36, 38, 40, 42), said at least one radiating element (62) having a central axis of radiation (Ac-Ac), said at least one radiating element (62) being able to emit or receive radiofrequency waves,
- a movable arm (60) able to displace between a deployed position and a folded position,
- a reflector (58) carried by the movable arm, said reflector (58) being suitable for reflecting or receiving radiofrequency waves in an emission direction (D_{E}), when the movable arm (60) is in a deployed position,
**characterised in that** said at least one radiating element (62) is attached to at least one side wall (36, 38, 40, 42) so that the central axis of radiation (A_{c}-A_{c}) of the radiating element is arranged perpendicular to said at least one side wall (36, 38, 40, 42) carrying said at least one radiating element (62), and **in that** the movable arm (60) is shaped so that an offset angle (β) comprised between 25° and 65° is formed between said at least one side wall (36, 38, 40, 42) carrying said at least one radiating element (62) and the emission direction (D_{E}), when the movable arm (60) is in a deployed position.

2. The spacecraft (28, 98, 108 to 122) according to claim 1, wherein the offset angle (β) is comprised between 35° and 55°.

3. The spacecraft (28, 98, 108 to 122) according to claim 2, wherein the offset angle (β) is equal to 45°.

4. The spacecraft (28, 98, 108 to 122) according to any one of claims 1 to 3, wherein two flat side walls (40, 42) which are contiguous and directly attached to each other each carry the at least one radiating element (62) having a central axis of radiation (A_{c}-A_{c}) perpendicular to the side wall (40, 42) which carries them.

5. The spacecraft (28, 98, 108 to 122) according to any one of claims 1 to 4, wherein the support structure (30) includes four flat side walls (36, 38, 40, 42) perpendicularly attached to each other so as to have a square section in a section plane which extends parallel to the base wall (32, 34), and wherein a diagonal (D) connecting two opposite corners of said square section extends in the direction of emission (D_{E}) of the reflector (58), when the movable arm (60) is in a deployed position.

6. The spacecraft (28, 98, 108 to 122) according to any one of claims 1 to 5, which includes at least one main radiator (44, 46) carried by a base wall (32, 34) and a heat transfer device (68) comprising at least one L-shaped fluid heat transport equipment (70, 71, 72, 73, 74, 75), said heat transport equipment (70, 71, 72, 73, 74, 75) having a first rectilinear part (77) in direct thermal contact with the base wall (32, 34) carrying the main radiator (44, 46), a single elbow part (78) and a second rectilinear part (80) in direct thermal contact with said at least one radiating element (62) and the flat side wall (40, 42) carrying said at least one radiating element.

7. The spacecraft (28, 98, 108 to 122) according to claim 6, wherein said flat side wall (40, 42) carrying said at least one radiating element includes at least one side cut-out (82, 83), and wherein said elbow part (78) of the heat transport equipment is engaged in said side cut-out (82, 83), the second straight part (80) extending on an outer face (76) of said flat side wall (40, 42) carrying said at least one radiating element (62).

8. The spacecraft (28, 98, 108 to 122) according to any one of claims 1 to 7, which includes at least one electronic amplification component (63) suitable for amplifying electrical signals transmitted to said at least one radiation element (62), and a casing (56) comprising said at least one radiation element (62) and said at least one electronic amplification component (63).

9. The spacecraft (28, 98, 108 to 122) according to any one of claims 1 to 5, which includes at least one main radiator (44, 46) carried by a base wall (32, 34) and at least one auxiliary radiator (100) pivotally mounted between a folded position wherein the auxiliary radiator is arranged parallel and next to the main radiator (44, 46), and an unfolded position wherein the auxiliary radiator (100) extends substantially in the extension of the main radiator (44, 46).

10. The spacecraft (28, 98, 108 to 122) according to claim 9, wherein said at least one auxiliary radiator (100) has the general shape of a triangle.

11. The spacecraft (28, 98, 108 to 122) according to claim 10, wherein one of the vertices of the triangle is truncated and delimits an edge (102) which is pivotally mounted relative to the main radiator (44, 46).

12. The spacecraft (28, 98, 108 to 122) according to any one of claims 1 to 5, which includes at least one main radiator (44, 46) carried by a base wall (32, 34), and wherein said at least one main radiator (44, 46) has at least three corners (84, 84') and wherein at least one corner (84) of the main radiator is truncated in a cutting plane parallel to the emission direction (D_{E}).

13. The spacecraft (28, 98, 108 to 122) according to any one of claims 1 to 12, wherein the support structure (28) includes:
- four posts (85) extending in a direction perpendicular to the base walls (32, 34), said posts (85) being distributed at the vertex of a parallelogram, and
- a reinforcing structure (86) rigidly connecting the four posts (85) to the same centre (88).

14. The spacecraft (28, 98, 108 to 122) according to any one of claims 1 to 5, wherein the support structure (30) has a polygonal section, in a section plane parallel to the plane of the base wall (32, 34) carrying a main radiator (44, 46), said polygonal section being a section among a triangular section (112), a rectangular section (108), a square section (28), a trapezoidal section (116), a pentagonal section (110), a hexagonal section (114) or a section along any polygon (118).

15. A launcher (91) comprising a fairing (92) and at least one spacecraft (28) under the fairing (92) according to any one of claims 1 to 5, which includes at least one main radiator (44, 46) carried by a base wall (32, 34), said main radiator (44, 46) being arranged perpendicular to the launching direction (A_{L}).

16. A spacecraft (28, 98, 108 to 122) stack according to claim 13, comprising at least two vehicles (28, 98, 108 to 122) arranged on top of each other, each post (85) of a first vehicle (28, 98, 108 to 122) being carried by a post (85) of the second vehicle (28, 98, 108 to 122), the posts (85) of each vehicle extending in the same direction.
